(19) Europäisches Patentamt
European Patent Office
Office européen des brevets

(11) **EP 4 206 295 A1**

(12) **EUROPEAN PATENT APPLICATION**
published in accordance with Art. 153(4) EPC

(43) Date of publication:
**05.07.2023 Bulletin 2023/27**

(21) Application number: **21875170.9**

(22) Date of filing: **13.09.2021**

(51) International Patent Classification (IPC):
**C09J 4/04** (2006.01)          **C09J 11/08** (2006.01)
**C08F 220/14** (2006.01)        **C09K 3/00** (2006.01)

(52) Cooperative Patent Classification (CPC):
**C08F 220/14; C09J 4/00; C09J 11/08; C09K 3/00**

(86) International application number:
**PCT/JP2021/033602**

(87) International publication number:
**WO 2022/070868 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2020 JP 2020164130**

(71) Applicant: **Asahi Kasei Kabushiki Kaisha**
**Tokyo 1000006 (JP)**

(72) Inventors:
• **IWATA Akira**
**Tokyo 100-0006 (JP)**
• **CHIBA Daijiro**
**Tokyo 100-0006 (JP)**

(74) Representative: **D Young & Co LLP**
**120 Holborn**
**London EC1N 2DY (GB)**

(54) **THICKENER FOR CYANOACRYLATE ADHESIVE**

(57)      An object of the present disclosure is to provide a thickener that can be suitably used as a thickener for adhesives and can improve the odor when used in the application of a thickener for adhesives, especially when used in the cyanoacrylate-based adhesives. The thickener for cyanoacrylate-based adhesives contains a methacrylic resin containing 95 to 99.9% by mass of a methyl methacrylate monomer unit and 0.1% to 5% by mass of an alkyl (meth)acrylate monomer unit having an alkyl group with a carbon number of 4 or more.

EP 4 206 295 A1

**Description**

TECHNICAL FIELD

The present disclosure relates to a thickener for cyanoacrylate-based adhesives and an adhesive.

BACKGROUND

In manufacturing of paints, adhesives, and other products, organic thickeners are used to adjust the viscosity of products for the purpose of improving the handleability. Among organic thickeners, thickeners including methacrylic resin compositions have a high transmittance and a high weather resistance as transparent resins, as well as excellent affinity with and chemical resistance against an alkyl cyanoacrylate etc. Methacrylic resin compositions are widely used as thickeners for adhesives because they dissolve quickly in monomers while maintaining their transparency.

In particular, among adhesives, cyanoacrylate-based adhesives initiate to polymerize in the presence of weak anions such as a trace amount of water or impurities due to the high anionic polymerization property of an alkyl cyanoacrylate, which is the main component, and can bond various materials firmly with reach other in a short time. Therefore, they are used as instant adhesives in a wide range of fields, including industrial, medical, and household applications.

Due to their high polymerizability, cyanoacrylate-based adhesives are transported and stored in environments that are to some extent sealed off from the external air, for example, they are injected into sealed containers. However, depending on the conditions of transportation, storage, and use, cyanoacrylate-based adhesives are often handled in environments that can become hot and humid. Because the viscosity may increase when cyanoacrylate-based adhesives are exposed to such conditions for a long time, an improvement is demanded.

In addition, cyanoacrylate-based adhesives sometimes have a peculiar odor caused not only by a cyanoacrylate per se but also by a thickener used for dissolution, and reduction in the odor is also demanded.

PTL 1 discloses an acrylic thickener which has a characteristic molecular weight distribution to provide an excellent solubility in methyl methacrylate.

PTL 2 discloses a thickener containing a methacrylic resin with excellent stability when exposed to methyl methacrylate at 50 °C / 95% Rh.

PTL 3 discloses inclusion of a poly alkyl (meth)acrylate having a weight average molecular weight from 200,000 to 500,000 as a thickener in a cyanoacrylate-based adhesive compositions.

CITATION LIST

Patent Literature

    PTL 1: JP 5131956 B
    PTL 2: JP 2018-178076 A
    PTL 3: JP H04-15267 A

SUMMARY

(Technical Problem)

With regards to acrylic thickeners with a characteristic molecular weight distribution as disclosed in PTL 1, it is described that the solubility in methyl methacrylate is good. However, the solubility in an alkyl cyanoacrylate and the long-term storage stability when dissolved in an alkyl cyanoacrylate, which is prone to polymerize in the presence of a trace amount of water or impurities, are not considered. In addition, the "odor" when dissolved in an alkyl cyanoacrylate has not been taken into consideration, and improvement is demanded.

In PTL 2, a thickener with an excellent long-term stability in methyl methacrylate is achieved by introducing a specific structure at the end of the resin. However, neither a long-term stability in an alkyl cyanoacrylate nor "the odor when being dissolved" is addressed.

In PTL 3, although use of an acrylic resin having a relatively high molecular weight as a thickener for cyanoacrylate-based adhesives is disclosed, the odor is not addressed.

Accordingly, the present disclosure is directed to provide a thickener that can be suitably used as a thickener for adhesives and that can improve the odor when used in the application of a thickener for adhesives, particularly when used as a thickener for cyanoacrylate-based adhesives.

(Solution to Problem)

In order to solve the above problem, the present inventors have conducted diligent research and surprisingly discovered that an adhesive with a reduced odor can be provided by using a methacrylic resin containing 95 to 99.9% by mass of a methyl methacrylate monomer unit and 0.1% to 5% by mass of an alkyl (meth)acrylate monomer unit having an alkyl group with a carbon number of 4 or more, to thereby complete the present disclosure.

Specifically, the present disclosure is as follows.

[1] A thickener for cyanoacrylate-based adhesives comprising a methacrylic resin comprising 95 to 99.9% by mass of a methyl methacrylate monomer unit and 0.1% to 5% by mass of an alkyl (meth)acrylate monomer unit having an alkyl group with a carbon number of 4 or more.

[2] The thickener for cyanoacrylate-based adhesives according to [1], wherein an MMA volatilization amount is 10 ppm by mass or less when 5 mg of the methacrylic resin is heated at 60 °C for 10 minutes.

[3] The thickener for cyanoacrylate-based adhesives according to [1] or [2], wherein a mass ratio of particles having a particle diameter of 710 $\mu$m or more with respect to 100% by mass of the thickener for cyanoacrylate-based adhesives is 5% by mass or less.

[4] The thickener for cyanoacrylate-based adhesives according to any one of [1] to [3], wherein a pH of the thickener for cyanoacrylate-based adhesives when dispersed in water is 2.0 or higher and 9.0 or lower.

[5] The thickener for cyanoacrylate-based adhesives according to any one of [1] to [4], wherein a molecular weight distribution (Mw/Mn) of the thickener for cyanoacrylate-based adhesives is 2.5 or less.

[6] An adhesive comprising the thickener for cyanoacrylate-based adhesives according to any one of [1] to [5] and an alkyl cyanoacrylate.

[7] The adhesive according to claim [6], wherein a viscosity is 0.5 to 10 Pa.s.

(Advantageous Effect)

According to the present disclosure, a thickener that can be suitably used as a thickener for adhesives, and that can improve the odor when used in the application of a thickener for adhesives, particularly when used as a thickener for cyanoacrylate-based adhesives, is provided.

In addition, the thickener of one example of the present embodiment can suppress increase in the viscosity and curing during storage and preservation of a thickened target, and can improve the storage and preservation stability of the product.

In addition, the thickener of one example of the present embodiment has an excellent stability after being dissolved, and has a characteristic of preventing an increase in the viscosity even if it is allowed to stand for a long time after dissolution.

DETAILED DESCRIPTION

The following provides a detailed description of an embodiment of the present disclosure (hereinafter, referred to as the "present embodiment"). However, the present disclosure is not limited to the following embodiment and may be implemented with various alterations that are within the essential scope thereof.

In the following description, constitutional units forming a polymer may be referred to as "...monomer units" and/or "...structural units" including a plurality of such "...monomer units".

Moreover, a constituent material of a "... monomer unit" may be referred to simply as a "... monomer", by omitting the term "unit".

[Thickener]

A thickener of a present embodiment contains at least a methacrylic resin containing, as monomer units, 95 to 99.9% by mass of a methyl methacrylate monomer unit and 0.1% to 5% by mass of an alkyl (meth)acrylate monomer unit having an alkyl group with a carbon number of 4 or more.

The above thickener may consist only of the above methacrylic resin.

It is preferable that the above thickener of the resin component is only the above methacrylic resin. The above thickener may further contain, as methacrylic resin, a methacrylic resin other than the above methacrylic resin as an impurity. However, it is preferable that the thickener consists only of the above methacrylic resin, and it is more preferable that the thickener consists only of one type of methacrylic resin as the above methacrylic resin.

The above thickener is preferably a thickener for cyanoacrylate-based adhesives.

The weight average molecular weight of the above thickener is preferably 85,000 or more and 1,500,000 or less from the viewpoint of imparting characteristics as a thickener.

In the case where the weight average molecular weight of the above methacrylic resin contained in the above thickener is 85,000 or more and less than 300,000, it is preferable that the following expression is satisfied. In the expression, $\eta 1$ represents the viscosity measured at 25 °C after being dissolved in ethyl cyanoacrylate at a concentration of 20% by mass, and $\eta 2$ represents the viscosity measured at 25 °C after being allowed to stand at 60 °C for 48 hours after being dissolved in ethyl cyanoacrylate at a concentration of 20% by mass. In this case, the water content of the above methacrylic resin measured by the drying method is preferably 0.01% or more and 1% or less.

$$1.0 < \eta 2/\eta 1 < 5.0$$

Further, in the case where the weight average molecular weight of the above methacrylic resin contained in the above thickener is 300,000 or more and 1,500,000 or less, it is preferable that the following expression is satisfied. In the expression, $\eta 3$ represents the viscosity measured at 25 °C after being dissolved in ethyl cyanoacrylate at a concentration of 10% by mass, and $\eta 4$ represents the viscosity measured at 25 °C after being allowed to stand at 60 °C for 48 hours after being dissolved in ethyl cyanoacrylate at a concentration of 10% by mass. In this case, the water content of the above methacrylic resin measured by the drying method is preferably 0.01% or more and 1% or less.

$$1.0 < \eta 4/\eta 3 < 5.0$$

(Methacrylic resin)

The above alkyl (meth)acrylate monomer unit having an alkyl group with a carbon number of 4 or more is preferably a monomer unit derived from an alkyl (meth)acrylate having an alkyl group with a carbon number of 4 to 8, such as n-butyl acrylate, sec-butyl acrylate, 2-ethylhexyl acrylate, n-butyl methacrylate, sec-butyl methacrylate, t-butyl methacrylate, and 2-ethylhexyl methacrylate. From the viewpoint of ease of availability and reduction of the odor when being dissolved into a cyanoacrylate, an n-butyl acrylate monomer unit is particularly preferred.

The above methacrylic resin may consist only of the above methyl methacrylate monomer unit and the above alkyl (meth)acrylate monomer unit having an alkyl group with a carbon number of 4 or more, or may further contain other monomer units such as other vinyl monomer units copolymerizable with the above methyl methacrylate.

Other vinyl monomers may be vinyl monomers copolymerizable with methyl methacrylate. Example include alkyl methacrylates having an alkyl group with a carbon number of 2 to 3; alkyl acrylates having an alkyl group with a carbon number of 1 to 3; $\alpha,\beta$-unsaturated acids such as acrylic acid and methacrylic acid; divalent carboxylic acids containing unsaturated groups such as maleic acid, fumaric acid, and itaconic acid, and alkyl esters thereof; aromatic vinyl compounds such as styrene, $\alpha$-methylstyrene, styrene having substituents on the benzene ring; cyanated vinyl compounds such as acrylonitrile and methacrylonitrile; maleic anhydride, maleimide, N-substituted maleimide; esterification products obtained by esterifying both end hydroxyl groups of ethylene glycol or an oligomer thereof with an acrylic acid or a methacrylic acid such as ethylene glycol di(meth)acrylate, diethylene glycol di(meth)acrylate, triethylene glycol di(meth)acrylate, and tetraethylene glycol di(meth)acrylate; esterification products obtained by esterifying two alcohol hydroxyl groups with an acrylic or a methacrylic acid, such as neopentyl glycol di(meth)acrylate and di(meth)acrylate; esterification products obtained by esterifying a polyhydric alcohol derivative, such as trimethylolpropane and pentaerythritol; andmultifunctional monomers such as divinylbenzene. They can be used alone or in combination of two or more. From the viewpoint of reducing the odor, when an alkyl acrylate having an alkyl group with a carbon number of 1 to 3 is contained, the mass ratio of monomer units derived from alkyl acrylates having an alkyl group with a carbon number of 1 to 3 is less than 0.1% by mass with respect to the total mass of all unit monomer units constituting the above methacrylic resin, and it is preferable that such monomer units are absent.

The mass ratio of monomer units derived from methyl methacrylate with respect to 100% by mass of the above methacrylic resin is 95 to 99.9% by mass from the viewpoint of reducing the odor when being dissolved (e.g., when being dissolved in an alkyl cyanoacrylate). It is more preferably 97.5 to 99.8% by mass, even more preferably 99 to 99.8% by mass, and particularly preferably 99.5 to 99.8% by mass.

The mass ratio of alkyl (meth)acrylate monomer units having an alkyl group with a carbon number of 4 or more with respect to 100% by mass of the above methacrylic resin is 0.1 to 5% by mass. It is more preferably 0.2 to 2.5% by mass, even more preferably 0.2 to 1% by mass, and particularly preferably 0.2 to 0.5% by mass. A mass ratio of more than 5% by mass is undesirable because a peculiar odor is caused by the remaining alkyl (meth)acrylate monomer units having an alkyl group with a carbon number of 4 or more or impurities derived therefrom when dissolved in an alkyl cyanoacrylate etc.. The mass ratio of less than 0.1% by mass is undesirable because the effect to improve the odor cannot be achieved by copolymerization of alkyl (meth)acrylate monomer units having an alkyl group with a carbon number of 4 or more.

In the present embodiment, other monomer units may be copolymerized to the extent that the effect of the present application is not impaired. In consideration of the solubility in an alkyl cyanoacrylate, etc. and odor when being dissolved, the mass ratio of other vinyl monomer that can copolymerize with the above methyl methacrylate is preferably 0 to 20 parts by mass, more preferably 15 parts by mass or less, even more preferably 10 parts by mass or less, and particularly preferably 5 parts by mass or less, when the sum of the amounts of methyl methacrylate and alkyl (meth)acrylate monomer units having an alkyl group with a carbon number of 4 or more is taken to be 100 parts by mass.

In 100 parts by mass of the above methacrylic resin, the sum of the mass ratios of monomer units derived from the above methyl methacrylate and the above alkyl (meth)acrylate monomer unit having an alkyl group with a carbon number of 4 or more is preferably 80 parts by mass or more, more preferably 85 parts by mass or more, even more preferably 90 parts by mass or more, even more preferably 95 parts by mass or more, and particularly preferably 100 parts by mass.

The thickener of the present embodiment is for cyanoacrylate-based adhesives. Herein, as the cyanoacrylate-based adhesives, cyanoacrylate-based adhesives containing an alkyl cyanoacrylate as the main component (e.g., cyanoacrylate-based adhesives having a mass ratio of the alkyl cyanoacrylate of 50% or more, more preferably 70% or more, with respect to 100% by mass of the adhesive) are preferred.

Examples of the above alkyl cyanoacrylate include cyanoacrylates having an alkyl group with a carbon number of 1 to 10, such as methyl cyanoacrylate, ethyl cyanoacrylate, propyl cyanoacrylate, isopropyl cyanoacrylate, butyl cyanoacrylate, isobutyl cyanoacrylate, octyl cyanoacrylate; and methoxyethyl cyanoacrylate and ethoxyethyl cyanoacrylate. Ethyl cyanoacrylate is typically used.

<Water content>

The above methacrylic resin preferably has a water content of 0.01% or more and 1% or less. For keeping the water content low, prolonged drying may be required. From the viewpoint of the productivity, the water content is preferably 0.01% or more. On the other hand, if the water content is more than 1%, the storage stability after dissolution into a cyanoacrylate such as ethyl cyanoacrylate tends to reduce. The water content is therefore preferably 1% or less. The water content is more preferably 0.01% or more and 0.8% or less, more preferably 0.02% or more and 0.7% or less, and most preferably more than 0.03% and less than 0.7%.

The water content can be measured by the method described in the EXAMPLES section below, and is measured by the drying method. A measurement is carried out by keeping 10.0 g of the methacrylic resin at 70 °C and the measurement is terminated when the weight loss during 10 seconds becomes 0.02% or less. The total weight loss is used as the water content.

The water content of the above methacrylic resin (e.g., pellets or beads of the methacrylic resin) can be adjusted by drying slurry after polymerization, for example.

Examples of the method to dry the above methacrylic resin include hot air drying in which hot air is sent to a tank by a hot air blower or a blow heater, vacuum drying in which the inside of the system is depressurized and heating is performed as necessary, barrel drying in which the polymerized material is rotated in a container to remove water, spin drying in which centrifugal force is used to dry the polymerized material, airflow drying in which the resin is transferred through a pipe by means of hot air, and a fluidized bed dryer in which the resin is dried at a certain temperature for a certain period of time, the bottom of the tank is opened then and closes to drop the resin into the subsequent drying tank.

To keep the water content in the above range, it is preferable to dry the resultant slurry in an airflow dryer and/or a fluidized bed dryer after the suspension polymerization is completed. In this process, low final water content can result in reduced productivity due to the time required for processing and result in problems such as pump-up failures in the slurry pumping process.

<Weight average molecular weight>

The above methacrylic resin preferably has a weight average molecular weight measured by gel permeation chromatography (GPC) of 85,000 to 1,500,000. The weight average molecular weight is preferably 85,000 or more from the viewpoint of the mechanical strength and the amount of resin used when used to produce an adhesive. A weight average molecular weight of less than 85,000 is undesirable because the amount of the methacrylic resin used to adjust the viscosity of the syrup to a certain value increases, which may affect the mechanical properties of the resultant adhesive and the like when used as a thickener. From the viewpoint of the solubility and the stability of properties when used as a thickener, the weight average molecular weight is preferably 1,500,000 or less. The preferred molecular weight depends on the desired viscosity and required properties when dissolved, but the weight average molecular weight is preferably 85,000 or more and less than 300,000 for use at a relatively low viscosity or for improving the dissolution speed. On the other hand, the viscosity is preferably 300,000 or more and 1,500,000 or less for use at a high viscosity or for achieving a desired viscosity with a small addition amount.

The ratio Mw/Mn of the weight average molecular weight Mw to the number average molecular weight Mn measured by gel permeation chromatography (GPC) of the above methacrylic resin is preferably 1.7 or more and 2.5 or less. From the viewpoint of ease of production, the ratio is more preferably 1.8 or more. From the viewpoints of suppressing portions remaining undissolved upon dissolution and improving the solubility, the ratio is preferably less than 2.5, even more preferably 2.4 or less, especially preferably 2.3 or less, and particularly preferably less than 2.3.

Note that the weight average molecular weight and the number average molecular weight are measured by GPC. A calibration curve is created with the elution time and the weight average molecular weight using a standard methacrylic resin whose monodisperse weight average molecular weight has been known and which can be obtained as a reagent, and an analytical gel column in which higher molecular weight components are eluted at earlier. From the calibration curve, the molecular weight of each sample can be determined. Specifically, a measurement can be performed by a method described in the EXAMPLES section below.

The shape of the above methacrylic resin is not limited, but the methacrylic resin is preferably in the form of pellets, flakes, beads, or powder. the methacrylic resin is preferably in the form of beads or powder from the viewpoint of shortening the dissolution time and reducing undissolved materials.

<Volume average particle diameter>

The above methacrylic resins has a volume average particle diameter of preferably 100 to 500 $\mu$m when used in the form of beads. The dissolution time is preferably 450 $\mu$m or less because the dissolution time shortens as the particle diameter decreased, and 100 $\mu$m or more is preferred from the viewpoint of control on scattering of beads during operation and reducing undissolved materials. The above volume average particle diameter is more preferably from 150 to 400 $\mu$m, and most preferably from 160 to 350 $\mu$m.

In this specification, volume average particle diameter refers to a volume particle diameter that can be measured by the method described in the EXAMPLES section below.

The above methacrylic resin preferably has a standard deviation (SD) of the volume particle diameter from 40 to 180 $\mu$m, more preferably from 60 to 180 $\mu$m. By setting the standard deviation within the above range, controls on polymerization are facilitated, clogging of the line during washing of polymerized beads when the slurry is transferred etc. can be prevented, and residual dissolved cyanoacrylate can be prevented upon dissolution into cyanoacrylate. The standard deviation is more preferably from 60 to 150 $\mu$m, even more preferably from 60 to 140 $\mu$m, and even more preferably from 70 to 135 $\mu$m.

Herein, the SD value is expressed by the following formula and can be measured by the method described in the EXAMPLES section below.

[Math. 1]

$$SD = \sqrt{\frac{\sum[f_i(lnx_i - ln\bar{x})]^2}{\sum f_i}}$$

In the above formula, xi represents the volume particle diameter, x- (x bar) represents the volume average particle diameter, and fi represents the volume frequency of xi in laser scattering.

The 10% volume particle diameter D10 of the above methacrylic resin is preferably 50 to 300 $\mu$m, more preferably 70 to 250 $\mu$m.

Examples of the method for controlling the standard deviation of the volume particle diameter and the 10% volume particle diameter D10 so as to fall within these ranges include usage of a suspension agent with an average particle diameter of 10 to 40 $\mu$m during polymerization, adjustment of the pH of the suspension agent and the aqueous phase so as to fall the range of 4 to 7, adjustment of the suspension agent by raising its temperature to 50 °C to 90 °C in advance and then charging it into water (50 °C to 90 °C) in the polymerization reactor, and adjusting the stirring speed appropriately. It is preferable to combine two or more of these methods.

The mass ratio of particles having a particle diameter of 710 $\mu$m or more with respect to 100% by mass of the above methacrylic resin (preferably methacrylic resin beads) is preferably 5% by mass or less, more preferably 3% by mass or less, even more preferably 1% by mass or less, especially preferably 0.5% by mass or less, and particularly preferably 0.1% by mass or less, from the viewpoint of obtaining high solubility in an alkyl cyanoacrylate. The mass ratio of particles with a particle diameter of 710 $\mu$m or more can be measured by the method described in the EXAMPLES section below, for example.

<Polymerization method>

The above methacrylic resins can be produced by using monomers constituting the methacrylic resin, a polymerization initiator, a chain transfer agent, a suspension agents, and other additives, for example.

Examples of the polymerization initiator used include typical radical polymerization initiators, e.g., peroxide-based polymerization initiators, such as di-t-butyl peroxide, lauryl peroxide, dilauroyl peroxide, t-butylperoxy 2-ethylhexanoate, 1,1-bis(t-butylperoxy)-3,3,5-trimethylcyclohexane, and 1,1-bis(t-butylperoxy)cyclohexane; and azo-based polymerization initiators such as azobisisobutyronitrile, azobisoisovaleronitrile, and 1,1-azobis(1-cyclohexanecabonitrile). One of these may be used alone or two or more of these may be used in combination. A combination of any of these radical initiators and an appropriate reducing agent may be used as a redox-based initiator.

The above polymerization initiator is generally used in the range of 0.001 to 1% by mass with respect to 100% of the total mass of monomers.

In the production method of the above methacrylic resin, a commonly used chain transfer agent can be used to adjust the molecular weight when the production is carried out by the radical polymerization method.

As chain transfer agents above, for example, mercaptans are preferably used such as n-butyl mercaptan, n-octyl mercaptan, n-dodecyl mercaptan, 2-ethylhexyl thioglycolate, ethylene glycol dithioglycolate, trimethylolpropane trithioglycolate, and pentaerythritol tetrakis(thioglycolate).

The above chain transfer agent may be used in an amount in the range of 0.001 to 1% by mass to 100% of the total mass of the monomers. The amount of the chain transfer agent is determined by the desired molecular weight.

Suspension polymerization or emulsion polymerization is preferably used as the polymerization method for the above methacrylic resin. Suspension polymerization gives resin beads in particle form while emulsion polymerization gives resin beads in powder form, which is operationally advantageous when dissolving the appropriate amount as a thickener to adjust the syrup to the desired viscosity.

Suspension polymerization is preferred over emulsion polymerization because the polymerization time is shorter.

In particular, when the suspension polymerization method is used for the above methacrylic resin, it is preferable that the molecular weight distribution is adjusted so as to fall within the above-mentioned range. When it is required to suppress generation of undissolved materials when being dissolved in an alkyl cyanoacrylate etc. due to a wide molecular weight distribution and to maintain a high storage stability after dissolution, it is preferable to obtain the resin by suspension polymerization in a single step rather than in multi-step polymerization.

As the polymerization method of the above methacrylic resin, it is preferable to use a method in which a suspension agent with an average particle diameter of 10 to 40 $\mu$m is dispersed in water. Of these, one-stage suspension polymerization is preferred by dispersing a suspension agent with an average particle diameter of 10 to 40 $\mu$m in water.

In the production method of the above methacrylic resin, it is preferable to carrying out polymerization by using the suspension agent with an average particle diameter of 10 to 40 $\mu$m dispersed in suspension polymerization water. This allows the standard deviation of the volume particle diameter of the methacrylic resin (e.g., methacrylic resin beads) to be controlled, stabilizes the polymerization behavior, and lowers the amount of heat removed, thereby improving the productivity.

The average particle diameter of the suspension agent can be adjusted by selecting the particle diameter of the suspension agent to be used. In addition, powders of different particle diameters can be mixed to obtain a suspension agent with the appropriate average particle diameter.

In the production method of the above methacrylic resin, the pH of the aqueous phase is preferably adjusted to a range of 4 to 7. By controlling the pH so as to fall within this range, the standard deviation of the particle diameter of the beads can be controlled and the polymerization behavior can be stabilized.

In the production method of the above methacrylic resin, the suspension agent is preferably adjusted in advance by raising the temperature to 50 °C to 90 °C and then fed into water (50 °C to 90 °C) in a reactor. This enables adjustments of the average particle diameter of the methacrylic resin (e.g., methacrylic resin beads) and the variation thereof.

Depending on the production method of the above methacrylic resin, it is preferable to use an inorganic suspension agent rather than an organic suspension agent. In the case where an organic suspension is used, the variation of the average particle diameter of the beads tends to become too small. Examples of the organic suspension agent include polyvinyl alcohol, methyl cellulose, ethyl cellulose, hydroxypropyl methyl cellulose, carboxymethyl cellulose, gelatin, and polyvinyl acetate.

Examples of the inorganic suspension agent above preferably includes an inorganic compound containing calcium and/or aluminum in consideration of the stability after dissolution in an alkyl cyanoacrylate. For example, calcium phosphates such as tricalcium phosphate (tricalcium phosphate), calcium carbonate, aluminum hydroxide are exemplified. In particular, from the viewpoint of the stability after dissolution, it is more preferable to include an inorganic compound containing aluminum.

The above suspension agent may also contain a suspending aid such as polyethylene glycol, sodium ethylenediamine tetraacetate, and sodium lauryl sulfate. The above suspension aid may be contained in the amount of 0.01 to 10% by mass of with respect to 100% mass of the suspension agent.

The above suspension agent is preferably mixed with the feedstock monomers in water.

<Washing method>

In the production method of the above methacrylic resin, it is preferable to perform acid washing, water washing, alkali washing, and the like to remove the suspension agent. The most suitable number of times to perform such a washing operation is preferably chosen in consideration of the efficiency of the operation and the removal of the suspension agent, and the washing operation may be repeated once or multiple times.

The optimal temperature for washing is preferably selected in consideration of the efficiency to remove the suspension agent and the degree of coloration of the resultant polymer, etc., and is preferably from 20 to 100 °C. It is more preferably from 30 to 95 °C, even more preferably from 40 to 95 °C, and particularly preferably from 50 to 80 °C.

The washing time per wash operation is preferably from 10 to 180 minutes, more preferably from 20 to 150 minutes, in view of the washing efficiency, reduction of the odor when used as a thickener, and the dissolution stability in the cyanoacrylate.

The pH of the washing solution used during washing is preferably in the range that allows for removal of the suspension agent, and is preferably pH 1 to 12. When acid washing is performed, the pH is preferably pH 1 to 5 and more preferably pH 1.2 to 4 from the viewpoint of the efficiency to remove the suspension agent and color tone of the resultant polymer. The acid used in this process can be any acid that can remove the suspension agent, and any conventionally known inorganic acid or organic acid can be used without any particular limitation. Examples of acids suitably used include inorganic acids such as hydrochloric acid, nitric acid, sulfuric acid, and phosphoric acid, boric acid, each of which may be used in a dilute solution diluted with water or the like. Examples of organic acids include organic acids having a carboxyl group, a sulfo group, a hydroxy group, a thiol group, or enol. In consideration of the effect of removing the suspension agent and the color tone of the resultant resin, nitric acid, sulfuric acid, and organic acids with a carboxyl group are more preferred.

After acid washing, it is preferable to further perform water washing or alkaline washing from the viewpoint of preventing dissolution residue when dissolved into a cyanoacrylate. The method to perform washing in hot water at 50 °C or higher is more preferred, and the method is to perform washing in hot water at 50 °C or higher followed by further alkaline washing and/or washing in hot water at 50 °C or higher is even more preferred.

By adjusting the pH of the slurry after washing to 2 or more and 9 or less, preferably 4 or more and 7 or less, more preferably 5 or more and 6.8 and or less, and particularly preferably 5.5 or more and 6.5 or less, a thickener which has an excellent storage stability when dissolved into a cyanoacrylate and has an excellent light resistance can be obtained.

(Additive)

The thickener of the present embodiment may optionally be blended with other additives. No specific limitations are placed on other additives so long as the effects disclosed herein can be exhibited, and such other additives may be selected as appropriate depending on the objective.

Examples of the additives include, but are not limited to: stabilizers such as ultraviolet absorbers, thermal stabilizers, and light stabilizers; plasticizers; flame retardants; flame retardant aids; curing agents; curing accelerators; antistatic agents; conductive agents; stress relievers; mold release agents; crystallization accelerators; hydrolysis inhibitors; lubricants; impact resistance imparting agents; sliding property modifiers; compatibilizers; nucleating agents; reinforcing agents such as fillers; flow modifiers; dyes; sensitizers; colorants; anti-settling agents; anti-sagging agents; fillers; defoamers; light diffusing particles; anti rust agents; antibacterial and antifungal agents; antifouling agents; and conductive polymers.

<Thermal stabilizer>

Examples of the thermal stabilizer include, but are not limited to, hindered phenol antioxidants, phosphoric antioxidants, and sulfuric antioxidants. One of such antioxidants may be used, or two or more of such antioxidants may be used in combination.

Although the content of the thermal stabilizer can be any amount that enables an effect of thermal stability improvement to be obtained, an excessive content may lead to precipitation upon dissolution. Accordingly, the content of the thermal stabilizer per 100 parts by mass of the methacrylic resin is preferably 5 parts by mass or less, more preferably 3 parts by mass or less, even more preferably 1 part by mass or less, further preferably 0.8 parts by mass or less, even further preferably 0.01 parts by mass to 0.8 parts by mass, and particularly preferably 0.01 parts by mass to 0.5 parts by mass.

<Ultraviolet absorber>

Examples of ultraviolet absorbers include, but are not limited to, benzotriazole compounds, benzotriazine compounds, benzoate compounds, benzophenone compounds, oxybenzophenone compounds, phenol compounds, oxazole compounds, malonic acid ester compounds, cyanoacrylate compounds, lactone compounds, salicylic acid ester compounds, and benzoxazinone compounds.
The melting point (Tm) of the ultraviolet absorber is preferably 80 °C or higher, more preferably 100 °C or higher, even more preferably 130 °C or higher, and still more preferably 160 °C or higher.
When the ultraviolet absorber is heated from 23 °C to 260 °C at a rate of 20 °C/min, the mass loss rate of the ultraviolet absorber is preferably 50% or less, more preferably 30% or less, even more preferably 15% or less, further preferably 10% or less, and even further preferably 5% or less.
Although the content of the above ultraviolet absorber can be any amount that enables the effect of the present disclosure to be obtained, an excessive content may lead to precipitation upon dissolution to prepare an adhesive. Accordingly, the amount with respect to 100 parts by mass of the methacrylic resin is preferably 5 parts by mass or less, more preferably 3 parts by mass or less, even more preferably 2.5 parts by mass or less, still even more preferably 2 parts by mass or less, and further still even more preferably 1.8 parts by mass or less, and is 0.01 parts by mass or more from the viewpoint that the effect of the compounding can be exhibited.
The above methacrylic resin obtained by the method described above may be used as the thickener of the present embodiment as it is, or it may be further mixed with another methacrylic resin composition to prepare a thickener.
The thickener of the present embodiment is particularly suitable for applications of a cyanoacrylate (preferably an alkyl cyanoacrylate, more preferably ethyl cyanoacrylate) thickener.
The mass ratio of the above methacrylic resin in the above thickener is preferably from 80 to 100% by mass, more preferably from 90 to 100% by mass, and particularly from 99 to 100% by mass, with respect to 100% mass of the thickener.

<Weight average molecular weight>

The above thickener preferably has a weight average molecular weight measured by gel permeation chromatography (GPC) of 85,000 to 1,500,000. The weight average molecular weight is preferably 85,000 or more from the viewpoint of the mechanical strength and the amount of resin used when used to produce an adhesive. A weight average molecular weight of less than 85,000 is undesirable because the amount of the thickener used to adjust the viscosity of the syrup to a certain value increases, which may affect the mechanical properties of the resultant adhesive and the like. From the viewpoint of the solubility and the stability of properties, the weight average molecular weight is preferably 1,500,000 or less. The preferred molecular weight depends on the desired viscosity and required properties when dissolved, but the weight average molecular weight is preferably 85,000 or more and less than 300,000 for use at a relatively low viscosity or for improving the dissolution speed. On the other hand, the viscosity is preferably 300,000 or more and 1,500,000 or less for use at a high viscosity or for achieving a desired viscosity with a small addition amount.
The ratio Mw/Mn of the weight average molecular weight Mw and the number average molecular weight Mn measured by gel permeation chromatography (GPC) of the above thickener is preferably 2.5 or less, more preferably 1.7 or more and 2.5 or less. From the viewpoint of ease of production, the ratio is more preferably 1.8 or more. From the viewpoints of suppressing portions remaining undissolved upon dissolution and improving the solubility, the ratio is preferably less than 2.5, even more preferably 2.4 or less, especially preferably 2.3 or less, and particularly preferably less than 2.3.
The weight average molecular weight and the number average molecular weight can be measured by GPC, specifically by the method described in the EXAMPLES section below.

<Dissolution stability>

In the above thickener (preferably a thickener containing the above methacrylic resin having a weight average molecular weight of 85,000 or more and less than 300,000), it is preferable that the following expression is satisfied. In the expression, $\eta1$ represents the viscosity measured at 25 °C after being dissolved in ethyl cyanoacrylate at 50 °C at a concentration of 20% by mass, and $\eta2$ represents the viscosity measured at 25 °C after being allowed to stand at 60 °C for 48 hours after being dissolved in ethyl cyanoacrylate at a concentration of 20% by mass.

$$1.0 < \eta2/\eta1 < 5.0$$

Here, being allowed to stand at 60 °C for 48 hours means that the time elapsed after being placed in an oven at 60 °C is preferably between 46 and 50 hours.

When $\eta2/\eta1$ is in the above range, the viscosity and the adhesive performance can be maintained even after the above thickener is dissolved in an alkyl cyanoacrylate and allowed to stand for a long time (e.g. several months) at room temperature.

Examples of the method to adjust $\eta2/\eta1$ to more than 1.0 and less than 5.0 include copolymerizing a certain amount of alkyl acrylate monomer units having an alkyl (meth) group with a carbon number of 4 or more, adjusting the water content of the methacrylic resin, adjusting the standard deviation of the particle diameter so as to fall within a certain range, and reducing the weight ratio of particles having a particle diameter of 710 $\mu$m or more. It is preferable to combine two or more of these method.

Preferably $1.0 < \eta2/\eta1 < 4.5$ is satisfied, more preferably $1.0 < \eta2/\eta1 < 4.0$ is satisfied. The ratio being 1.0 or less is undesirable because the viscosity drops after dissolution and the thickener will not function as a thickener. The ratio being 5 or more is undesirable because curing may occur during a long-term storage such as storage for several months or if the temperature rises during transportation, or the strength of the adhesive after being cured may be reduced.

Further, in the case where the above thickener contains the above methacrylic resin having a weight average molecular weight of 300,000 or more to 1,500,000, it is preferable that the following expression is satisfied. In the expression, $\eta3$ represents the viscosity measured at 25 °C after being dissolved in ethyl cyanoacrylate at 50 °C at a concentration of 10% by mass, and $\eta4$ represents the viscosity measured at 25 °C after being allowed to stand at 60 °C for 48 hours after being dissolved in ethyl cyanoacrylate at a concentration of 10% by mass.

$$1.0 < \eta4/\eta3 < 5.0$$

When the above range is satisfied, the viscosity and the adhesive performance can be maintained even after the above thickener is dissolved in an alkyl cyanoacrylate and allowed to stand for a long time (e.g. several months) at room temperature.

Preferably $1.0 < \eta4/\eta3 < 4.5$ is satisfied, more preferably $1.0 < \eta4/\eta3 < 4.0$ is satisfied.

The ratio being 1.0 or less is undesirable because the viscosity drops after dissolution and the thickener will not function as a thickener. The ratio being 5 or more is undesirable because curing may occur during a long-term storage such as storage for several months or if the temperature rises during transportation, or the strength of the adhesive after adhesive is set may be reduced.

The above viscosities $\eta1$, $\eta2$, $\eta3$, and $\eta4$ can be measured by the methods described in the Examples section below.

<MMA volatilization amount>

From the viewpoint of reducing the odor, it is preferable that the MMA volatilization amount from the above thickener when 5 mg of the above thickener is heated at 60 °C for 10 minutes is 10 ppm by mass or less, more preferably 5 ppm by mass or less, and even more preferably 1 ppm by mass or less.

Of these, the MMA volatilization amount when 5 mg of the above methacrylic resin contained in the above thickener is heated at 60 °C for 10 minutes is preferably 10 ppm by mass or less, more preferably 5 ppm by mass or less, and even more preferably 1 ppm by mass or less.

One method to adjust the volatilization amount so as to fall within the above range is drying the slurry obtained through polymerization under an air current at a temperature of 100 °C or higher, preferably at a temperature of 120 °C or higher, for example. This MMA volatilization amount can be measured by pyrolysis GC/MS.

<YI value of acetone solution>

When the above thickener is dissolved in acetone at a concentration of 10% by mass and the YI value is measured in a cell having a thickness of 1 cm, the YI value of the above thickener is preferably 0.1 to 2, more preferably 0.2 to 1.9, and even more preferably 0.3 to 1.8.

Furthermore, when the above methacrylic resin contained in the above thickener is dissolved in acetone at a concentration of 10% by mass and the YI value is measured in a cell having a thickness of 1 cm, the YI value is preferably 0.1 to 2, more preferably 0.2 to 1.9, and even more preferably 0.3 to 1.8.

When the YI value is adjusted so as to fall within the above range, an adhesive with excellent hue and light resistance can be obtained. An method to adjust the YI value so as to fall within the above range is producing the methacrylic resin by one-step polymerization instead of two-step polymerization.

<pH when thickener is dispersed in water>

When 20 g of the above thickener and 100 g of pure water are stirred to achieve dispersion and are allowed to stand still to allow the solids to settle, the pH of the aqueous phase of a supernatant liquid measured at room temperature is preferably 2 or more and 9 or less. From the viewpoint of keeping a particularly good hue when the thickener is dissolved and used, the solubility in a cyanoacrylate, and suppression of the odor caused by residues, it is more preferably 3 or more, and particularly preferably 3.5 or more. From the viewpoint of improving the storage stability after dissolution in the cyanoacrylate, etc., the pH is preferably 8.5 or less, more preferably 8 or less, and especially preferably 7.5 or less.

Furthermore, when 20 g of the above methacrylic resin contained in the above thickener and 100 g of pure water are stirred to achieve dispersion and are allowed to stand still to allow the solids to settle, the pH of the aqueous phase of a supernatant liquid measured at room temperature is preferably 2 or more and 9 or less. From the viewpoint of keeping a particularly good hue when the thickener is dissolved and used, the solubility in a cyanoacrylate, and suppression of the odor caused by residues, it is more preferably 3 or more, and particularly preferably 3.5 or more. From the viewpoint of improving the storage stability after dissolution in the cyanoacrylate, etc., the pH is preferably 8.5 or less, more preferably 8 or less, and especially preferably 7.5 or less.

<Mass ratio of particles having particle diameter of 710 $\mu$m or more>

From the viewpoint of achieving a high solubility in a cyanoacrylate-based adhesive, the mass ratio of particles having a particle diameter of 710 $\mu$m or more with respect to 100% by mass of the above thickener is preferably 5% or less, more preferably 3% or less, even more preferably 1% or less, especially preferably 0.5% or less, and particularly preferably 0.1% by mass or less. The mass ratio of particles with a particle diameter of 710 $\mu$m or more can be measured by the method described in the EXAMPLES section below, for example.

[Adhesive]

An adhesive of the present embodiment contains the above thickener including the above methacrylic resin, and a cyanoacrylate (preferably an alkyl cyanoacrylate). It may also contain the above additive.

The above adhesive may consist only of the above thickener and an alkyl cyanoacrylate.

The above adhesive preferably has a viscosity of 0.5 to 10 Pa·s at 25 °C. As used herein, this viscosity is the viscosity measured with a B-type viscometer.

The viscosity is more preferably 1 to 9 Pa·s, and even more preferably 2 to 8 Pa·s. Such a range provides an adhesive with an excellent handleability. Methods to adjust the viscosity of the adhesive so as to fall within the above range include adjusting the weight average molecular weight of the methacrylic resin and the concentration of the methacrylic resin or the thickener in the adhesive. Specifically, when a methacrylic resin with a high weight average molecular weight is used, the concentration is lowered; when a methacrylic resin with a low weight average molecular weight is used, the concentration is increased. Generally, a higher weight average molecular weight is preferable because the amount to be added can be reduced. However, the time duration until the methacrylic resin having a high molecular weight is dissolved may be prolonged. Thus, the amount is preferably set appropriately according to the required properties as an adhesive.

As a specific concentration, a methacrylic resin with a weight average molecular weight of 85,000 or more and less than 300,000 is dissolved in a cyanoacrylate (preferably an alkyl cyanoacrylate, more preferably ethyl cyanoacrylate) at a mass concentration of 10 to 30%, preferably at a mass concentration of 12 to 28%, even more preferably at a mass concentration of 15 to 25%, with respect to 100% by mass of the adhesive .

The methacrylic resin having a weight average molecular weight of 300,000 or more and 1,500,000 or less is preferably dissolved in a cyanoacrylate (preferably an alkyl cyanoacrylate, more preferably ethyl cyanoacrylate) at a mass concentration of 1% to 20%, more preferably at a mass concentration of 3 to 18%, even more preferably at a mass concentration of 5 to 15%, with respect to 100% by mass of the adhesive.

The temperature upon dissolution is preferably 30 °C or higher from the viewpoint of ease of dissolution, and is 80 °C or lower from the viewpoint of the stability.

EXAMPLES

The following examples and comparative examples will be used to further describe the details.

<Raw materials>

The raw materials used were as follows

Methyl methacrylate (MMA): manufactured by Asahi Kasei Corporation (2.5 ppm by mass of 2,4-dimethyl-6-tert-butylphenol produced by Chugai Boeki Co., Ltd. was added as a polymerization inhibitor)
Methyl acrylate (MA): manufactured by Mitsubishi Chemical (which contained 15 ppm of 4-methoxyphenol as a polymerization inhibitor)
Butyl acrylate (BA): manufactured by TOAGOSEI CO., LTD. (which contained 15 ppm by mass of 4-methoxyphenol as a polymerization inhibitor)
Ethylhexyl acrylate (EHA): manufactured by Tokyo Chemical Industry Co., Ltd.
n-octyl mercaptan (NOM): manufactured by Arkema
2-ethylhexyl thioglycolate (EHTG): manufactured by Arkema
Lauroyl peroxide (LPO): manufactured by NOF CORPORATION
Tricalcium phosphate (calcium phosphate): manufactured by Nippon Chemical Industrial Co., Ltd.
Calcium carbonate (calcium calbonate): manufactured by NITTO FUNKA KOGYO K. K., NN #200, average particle diameter 14.8 $\mu$m.
Sodium lauryl sulfate (sodium lauryl sulfate): manufactured by Wako Pure Chemical Corporation, used as a suspension aid
Ethylenediamine tetraacetic acid tetrasodium dihydrate (EDTA): manufactured by Kishida Chemicals Co., Ltd.
Aluminum hydroxide: SBX73, B303, B153, and B103: manufactured by Nippon Light Metal Company, Ltd., the average particle diameter was adjusted by mixing these accordingly

[I. Production of thickener]

(Example 1)

- Suspension agent -

A mixed liquid (a2) was prepared by charging 5 kg of water, 130 g of aluminum hydroxide having an average particle diameter of 33 $\mu$m, 0.39 g of sodium lauryl sulfate, and 2.3 g of EDTA to a vessel having a stirrer equipped with four pitched-paddle blades, and then mixing these materials under stirring. The average particle diameter of the suspension agent in the mixed liquid (a2) was 33 $\mu$m, and the pH of the resultant mixed liquid was 5.5. The resultant mixed liquid (a2) was heated to 70 °C.
Subsequently, 25 kg of water was fed into a 60-L reactor, the temperature was raised to 80 °C, and a formulated solution obtained by blending 3 kg of the above mixed liquid (a2) of the suspension agent, 21 kg of feedstock monomers in the formulation ratio summarized in Table 1, 60 g of EHTG, and 43 g of LPO was charged. Suspension polymerization was then carried out while the temperature was maintained to about 80 °C, and an exothermic peak was observed 140 minutes after the monomers were fed.
The temperature was then increased to 93 °C at a rate of 1 °C/min, and the temperature was maintained to about 93 °C for 45 minutes. The polymerization reaction was substantially terminated to obtain a polymer slurry.
Next, the solution was cooled to 50 °C, and 20% by mass of sulfuric acid was added to dissolve the suspension agent. The polymerization reaction solution was then filtered through a 1.68-mm mesh sieve to remove agglomerates, and then filtered through a filter cloth to separate the beads-like methacrylic resin particles from the suspension waste solution. The pH of the suspension waste solution at that time was 3.3.
Then, ion-exchanged water heated to about 70 °C in a roughly equal amount to the beads-like polymer was added, and stirring, washing, and filtration were carried out. Washing operation with ion-exchanged water at about 70 °C was performed in the similar manner once more to obtain a slurry polymer solution (water washing was performed twice in total). A water solution of sodium hydroxide was added dropwise to the resultant slurry polymer solution to adjust the pH to 8.5, and stirring and washing were performed. After filtration through a filter cloth and further stirring and washing with ion-exchanged water heated to 70 °C, the resultant slurry polymer solution had a pH of 6.1. Filtration through a filter cloth was then performed to obtain resin beads. The resultant undried resin beads were dried under air flow at 150 °C (30 Nm$^3$/hr) using an air flow dryer, and then dried at 90 °C for 5 minutes in a fluidized bed dryer (25 Nm$^3$/hr) to obtain methacrylic resin beads. The weight average molecular weight of the resultant beads was 142,000, and Mw/Mn = 1.9. It was confirmed from an NMR (JNM-ECA500 manufactured by JEOL Ltd.) measurement that a methacrylic resin with the composition that matched the feedstock was obtained.

(Example 2)

A suspension agent mixture (a2) was prepared in the manner similar to Example 1.

Subsequently, 25 kg of water was fed into a 60-L reactor, the temperature was raised to 80 °C, and a formulated solution obtained by blending 3 kg of the above mixed liquid (a2) of the suspension agent, 21 kg of feedstock monomers in the formulation ratio summarized in Table 1, 60 g of EHTG, and 43 g of LPO was charged. Suspension polymerization was then carried out while the temperature was maintained to about 80 °C, and an exothermic peak was observed 140 minutes after the monomers were fed.

The temperature was then increased to 93 °C at a rate of 1 °C/min, and the temperature was maintained to about 93 °C for 45 minutes. The polymerization reaction was substantially terminated to obtain a polymer slurry.

Next, the solution was cooled to 50 °C, and 20% by mass of sulfuric acid was added to dissolve the suspension agent. The polymerization reaction solution was then filtered through a 1.68-mm mesh sieve to remove agglomerates, and then filtered through a filter cloth to separate the beads-like methacrylic resin particles from the suspension waste solution. The pH of the suspension waste solution at that time was 3.3.

Then, ion-exchanged water heated to about 70 °C in a roughly equal amount to the beads-like polymer was added, and stirring, washing, and filtration were carried out. Washing operation with ion-exchanged water at about 70 °C was performed in the similar manner twice more to obtain a slurry polymer solution (water washing was performed three times in total). The pH of the resultant slurry polymer solution was 6.0. Filtration through a filter cloth was then performed to obtain resin beads. The resultant undried resin beads were dried under air flow at 150 °C (30 Nm$^3$/hr) using an air flow dryer, and then dried at 90 °C for 5 minutes in a fluidized bed dryer (25 Nm$^3$/hr) to obtain methacrylic resin beads. The weight average molecular weight of the resultant beads was 136,000, and Mw/Mn = 2.0.

(Example 3 and Comparative Examples 1 and 2)

Methacrylic resin beads were obtained in the similar manner to Example 1, except that polymerization was carried out using the compositions summarized in Table 1.

(Example 4)

Methacrylic resin beads were obtained by the composition and the polymerization method similar to those in Example 1, except that the temperature of the airflow dryer was set to 100 °C.

(Example 5)

- Suspension agent -

A mixed liquid (a2) was prepared by charging 5 kg of water, 130 g of aluminum hydroxide having an average particle diameter of 23 μm, 0.39 g of sodium lauryl sulfate, and 2.3 g of EDTA to a vessel having a stirrer equipped with four pitched-paddle blades, and then mixing these materials under stirring. The average particle diameter of the suspension agent in the mixed liquid (a2) was 23 μm, and the pH of the resultant mixed liquid was 5.5. The resultant mixed liquid (a2) was heated to 70 °C.

In a 60-L reactor, 27 kg of water, 3 kg of suspension agent prepared in the similar manner to Example 1, 16 kg of feedstock monomers in the formulation ratio summarized in Table 2, 13 g of EHTG, and 25 g of LPO were fed, stirred and mixed, The polymerization was carried out for 150 minutes at a temperature in the reactor of 80 °C, followed by a temperature increase to 93 °C at a rate of 1 °C/min. Aging was performed for 45 min. The polymerization reaction was substantially terminated to obtain a polymer slurry. Next, the solution was cooled to 50 °C, and 20% by mass of sulfuric acid was added to dissolve the suspension agent.

Then, after the polymerization reaction solution was filtered through a 1.68-mm mesh sieve to remove agglomerates, the resultant suspension was filtered through a filter cloth to separate the beads-like methacrylic resin particles from the suspension waste solution. Then, ion-exchanged water heated to about 70 °C in a roughly equal amount to the beads-like polymer was added, and subsequent operations were performed in the similar manner to Example 1 to obtain resin beads. The weight average molecular weight of the resultant resin beads was 402,000, and Mw/Mn = 2.2.

(Example 6)

Methacrylic resin beads were obtained by the composition and the polymerization method similar to those in Example 5, except that the amount of EHTG in the feedstock monomers was 8 g. The time until the exothermic peak was observed after the monomers were fed was 120 minutes. The weight average molecular weight of the resultant resin beads was 654,000, and Mw/Mn = 2.2.

(Example 7)

Methacrylic resin beads were obtained by the composition and the polymerization method similar to those in Example 5, except that the amount of water used was 30 kg and polymerization was performed without adding EHTG. The time until the exothermic peak was observed after the monomers were fed was 100 minutes. The weight average molecular weight of the resultant resin beads was 1,250,000, and Mw/Mn = 22.4.

(Example 8 and Comparative Examples 3 and 4)

Methacrylic resin beads were obtained in the similar manner to Example 1, except that ethylhexyl acrylate and methyl acrylate were used instead of BA.

(Example 9)

A polymer slurry was obtained by the composition and the polymerization method similar to those in Example 1. Next, the solution was cooled to 50 °C, and 20% by mass of sulfuric acid was added to dissolve the suspension agent. The polymerization reaction solution was then filtered through a 1.68-mm mesh sieve to remove agglomerates, and then filtered through a filter cloth to separate the beads-like methacrylic resin particles from the suspension waste solution.
Then, ion-exchanged water heated to normal temperature (about 25 °C) in a roughly equal amount to the beads-like polymer was added, and stirring and washing were carried out. The pH of the slurry liquid was 4.6. Filtration through a filter cloth was performed to obtain resin beads. The resultant undried resin beads were dried under air flow at 150 °C (30 Nm$^3$/hr) using an air flow dryer, and then dried at 90 °C for 5 minutes in a fluidized bed dryer (25 Nm$^3$/hr) to obtain methacrylic resin beads.

(Example 10)

A polymer slurry was obtained by the composition and the polymerization method similar to those in Example 3. Next, the solution was cooled to 50 °C, and 20% by mass of sulfuric acid was added to dissolve the suspension agent. The polymerization reaction solution was then filtered through a 1.68-mm mesh sieve to remove agglomerates, and then filtered through a filter cloth to separate the beads-like methacrylic resin particles from the suspension waste solution.
Then, ion-exchanged water at normal temperature in a roughly equal amount to the beads-like polymer was added, and a water solution of sodium hydroxide was added to adjust the pH to 10.5. The resultant was then stirred and washed, and filtered through a filter cloth to obtain resin beads. The resultant undried resin beads were dried under air flow at 150 °C (30 Nm$^3$/hr) using an air flow dryer, and then dried at 90 °C for 5 minutes in a fluidized bed dryer (25 Nm$^3$/hr) to obtain methacrylic resin beads.
(Example 11) Polymerization example of in two-step polymerization A suspension agent solution (A) was prepared by charging 2 kg of water, 65 g of tricalcium phosphate, 39 g of calcium carbonate, and 0.39 g of sodium lauryl sulfate to a vessel having a stirrer equipped with four pitched-paddle blades.
Next, 26 kg of water was fed into a 60-L reactor, the temperature was raised to 80 °C, and the entire suspension agent solution (A) and feedstock monomers obtained by blending 3900 g of methyl methacrylate, 20 g of butyl acrylate, 42 g of EHTG, and 28 g of LPO in advance were added.
The suspension polymerization was carried out for 150 minutes while the temperature was maintained at about 80 °C. The reaction was substantially terminated to obtain polymer (I). Then, after stirring at 80 °C for 60 minutes, a monomer feedstock obtained by blending 20 kg of methyl methacrylate, 100 g of butyl acrylate, 35 g of NOM, and 40 g of LPO in advance was fed into the reactor, followed by suspension polymerization at approximately 80 °C for 90 minutes. The temperature was then increased to 92 °C at a rate of 1 °C/min and was then maintained for 60 minutes, and the polymerization reaction was substantially terminated.
Next, the solution was cooled to 50 °C, and 20% by mass of sulfuric acid was added to dissolve the suspension agent. The polymerization reaction solution was then filtered through a 1.68-mm mesh sieve to remove agglomerates, and then filtered through a filter cloth to separate the beads-like methacrylic resin particles from the suspension waste solution. The pH of the suspension waste solution at that time was 3.3.
Then, ion-exchanged water heated to about 70 °C in a roughly equal amount to the beads-like polymer was added, and stirring, washing, and filtration were carried out. Washing operation with ion-exchanged water at about 70 °C was performed in the similar manner once more to obtain a slurry polymer solution (water washing was performed twice in total). A water solution of sodium hydroxide was added dropwise to the resultant slurry polymer solution to adjust the pH to 8.5, and stirring and washing were performed. After filtration through a filter cloth and further stirring and washing with ion-exchanged water heated to 70 °C, the resultant slurry polymer solution had a pH of 6.1. Filtration through a filter cloth was then performed to obtain resin beads. The resultant undried resin beads were dried under air flow at 150 °C (30 Nm$^3$/hr) using an air flow dryer, and then dried at 90 °C for 5 minutes in a fluidized bed dryer (25 Nm$^3$/hr) to obtain methacrylic resin beads. The weight average molecular weight of the resultant beads was 124,000, and Mw/Mn = 2.6.

[Comparative Example 5]

A suspension agent solution (A) was prepared by charging 2 kg of water, 65 g of tricalcium phosphate, 39 g of calcium carbonate, and 0.39 g of sodium lauryl sulfate to a vessel having a stirrer equipped with four pitched-paddle blades.

Next, 21 kg of water was fed into a 60-L reactor, the temperature was raised to 80 °C, and the suspension agent solution (A), feedstock monomers in the formulation ratio summarized in Table 3, and a formulated solution obtained by blending 60 g of EHTG and 63 g of LPO were added. The suspension polymerization was then carried out for 110 minutes while the temperature was maintained to about 80 °C. The temperature was then increased to 93 °C at a rate of 1 °C/min and maintained to about 93 °C for 45 minutes. The polymerization reaction was substantially terminated to obtain a polymer slurry. The polymerization time was shortened because the amount of LPO as the initiator was increased.

Next, the solution was cooled to 50 °C, and 20% by mass of sulfuric acid was added to dissolve the suspension agent. The polymerization reaction solution was then filtered through a filter cloth to separate the beads-like methacrylic resin particles from the suspension waste solution. The pH of the suspension waste solution at that time was 3.3.

Then, ion-exchanged water heated to about 70 °C in a roughly equal amount to the beads-like polymer was added, and stirring, washing, and filtration were carried out. Washing operation with ion-exchanged water at about 70 °C was performed in the similar manner once more to obtain a slurry polymer solution (water washing was performed twice in total). A water solution of sodium hydroxide was added dropwise to the resultant slurry polymer solution to adjust the pH to 8.5, and stirring and washing were performed. After filtration through a filter cloth and further stirring and washing with ion-exchanged water heated to 70 °C, the resultant slurry polymer solution had a pH of 6.1. Filtration through a filter cloth was then performed to obtain resin beads. The resultant undried resin beads were dried under air flow at 150 °C (30 Nm$^3$/hr) using an air flow dryer, and then dried at 90 °C for 5 minutes in a fluidized bed dryer (25 Nm$^3$/hr) to obtain methacrylic resin beads. The ratio of particles of 710 μm or more in the resultant beads was 5.1%.

(Example 12)

- Suspension agent -

A mixed liquid (a2) was prepared by charging 5 kg of water, 130 g of aluminum hydroxide having an average particle diameter of 33 μm, 0.39 g of sodium lauryl sulfate, and 2.3 g of EDTA to a vessel having a stirrer equipped with four pitched-paddle blades, and then mixing these materials under stirring. The average particle diameter of the suspension agent in the mixed liquid (a2) was 33 μm, and the pH of the resultant mixed liquid was 5.5. The resultant mixed liquid (a2) was heated to 70 °C.

Subsequently, 25 kg of water was fed into a 60-L reactor, the temperature was raised to 80 °C, and a formulated solution obtained by blending 3 kg of the above mixed liquid (a2) of the suspension agent, 21 kg of feedstock monomers in the formulation ratio summarized in Table 1, 60 g of EHTG, and 43 g of LPO was charged. Suspension polymerization was then carried out while the temperature was maintained to about 80 °C, and an exothermic peak was observed 140 minutes after the monomers were fed.

The temperature was then increased to 93 °C at a rate of 1 °C/min, and the temperature was maintained to about 93 °C for 45 minutes. The polymerization reaction was substantially terminated to obtain a polymer slurry.

Next, the solution was cooled to 50 °C, and 20% by mass of sulfuric acid was added to dissolve the suspension agent. The polymerization reaction solution was then filtered through a 1.68-mm mesh sieve to remove agglomerates, and then filtered through a filter cloth to separate the beads-like methacrylic resin particles from the suspension waste solution. The pH of the suspension waste solution at that time was 3.3.

Then, ion-exchanged water heated to about 70 °C in a roughly equal amount to the beads-like polymer was added, and stirring, washing, and filtration were carried out. Washing operation with ion-exchanged water at about 70 °C was performed in the similar manner once more to obtain a slurry polymer solution (water washing was performed twice in total). A water solution of sodium hydroxide was added dropwise to the resultant slurry polymer solution to adjust the pH to 8.5, and stirring and washing were performed. After filtration through a filter cloth and further stirring and washing with ion-exchanged water heated to 70 °C, the resultant slurry polymer solution had a pH of 6.1. Filtration through a filter cloth was then performed to obtain resin beads. The resultant undried resin beads were dried under air flow at 80 °C (30 Nm$^3$/hr) using an air flow dryer, and then dried at 90 °C for 5 minutes in a fluidized bed dryer (25

Nm$^3$/hr) to obtain methacrylic resin beads. The weight average molecular weight of the resultant beads was 147,000, and Mw/Mn = 1.8.

[II. Physical properties of methacrylic resin]

(II-1) (Weight average molecular weight and molecular weight distribution)

The weight average molecular weight and the molecular weight distribution of the methacrylic resin beads obtained in each of the examples and the comparative examples were measured using the following equipment and conditions.

Measurement apparatus: Gel permeation chromatography (HLC-8320GPC) manufactured by Tosoh Corporation

Column: one TSK guard column Super H-H, two TSK gel Super HM-M, and one TSK gel Super H2500 were connected in series in this order and used.

From these columns, high molecular weight components elute earlier, and low molecular weight components elute later.

Detector: RI (differential refractometer) detector
Detection sensitivity: 3.0 mV/min
Column temperature: 40 °C
Sample: 20 mL of a tetrahydrofuran solution with 0.02 g of the methacrylic resin
Injection amount: 10 µL
Developing solvent: tetrahydrofuran; flow rate: 0.6 mL/min; 0.1 g/L of 2,6-di-t-butyl-4-methylphenol (BHT) was added as an internal standard

The following ten kinds of polymethyl methacrylate having known monodisperse peak top molecular weights and different molecular weights (manufactured by Polymer Laboratories; PMMA Calibration Kit M-M-10) were used as standard samples for the calibration curve.

Weight peak molecular weight (Mp)

| Standard sample 1 | 1,916,000 |
| Standard sample 2 | 625,500 |
| Standard sample 3 | 298,900 |
| Standard sample 4 | 138,600 |
| Standard sample 5 | 60,150 |
| Standard sample 6 | 27,600 |
| Standard sample 7 | 10,290 |
| Standard sample 8 | 5,000 |
| Standard sample 9 | 2,810 |
| Standard material 10 | 850 |

The RI detection intensity relative to the elution time of the methacrylic resin was measured under the conditions listed above.

Based on the area in the GPC elution curve and the calibration curve of the cubic approximate expression, the weight average molecular weight (Mw) and the molecular weight distribution (Mw/Mn) of the methacrylic resin were determined.

(II-2) (Volume average particle diameter and D10)

The volume average particle diameter, the SD value, the 10% particle diameter, and the particle diameter of the suspension agent were measured by the laser scattering technique using LS13320 manufactured by Beckman Coulter.

(II-3) (Measurement of water content)

A measurement was carried out by keeping 10.0 g of beads at 70 °C using MOISTURE BALANCE MOC-120H manufactured by Shimadzu Corporation, and the measurement was terminated when the weight loss rate for 10 seconds became 0.02% or less. The total weight loss rate was used as the water content.

(II-4) (Measurement of MMA volatilization amount)

The MMA volatilization amount was measured using GC-6890 and MSD-5973 manufactured by Agilent. In a pyrolysis furnace, 5 mg of the methacrylic resin was heated at 60 °C for 10 minutes, and the gas evolved was trapped in a column HP5-MS cooled with liquid nitrogen. The trapped evolved gas portions were analyzed by GC/MS to quantify the MMA volatilization amount.

(II-5) (Measurement of YI value)

A solution was prepared by dissolving each resultant methacrylic resin in acetone at a concentration of 10% by mass, and was placed in a cell with a thickness of 1 cm. The YI value was measured using a color difference meter (TC-8600A produced by Tokyo Denshoku Co., Ltd.; light source: 10-C) in accordance with JIS K7105.

(II-6) (pH of aqueous phase when dispersed)

After 20 g of a methacrylic resin and 100 g of pure water were stirred to achieve dispersion and were allowed to stand still to allow the solids to settle. The pH was then measured at room temperature.

Measurement apparatus: pH meter F-52 (HORIBA, Ltd.)
Electrode: Standard ToupH electrode 9615S-10D

(II-7) (Measurement of content of particles with particle diameter of 710 $\mu$m or more)

Using sieves (JTS-200-45-31 (aperture size: 710 $\mu$m), JTS-200-45-44 (aperture size: 500 $\mu$m), 35 (aperture size: 355 $\mu$m), 36 (aperture size: 300 $\mu$m), 37 (aperture size: 250 $\mu$m), 38 (aperture size: 150 $\mu$m), and 61 (receptacle)), about 100 g of a methacrylic resin was sieved at a maximum vibration force for 10 minutes using TSK B-1 sieve tester. The weight of particles remaining on each sieve was measured. Further, the amount of particles remaining on the sieve with an aperture of 710 $\mu$m (the content of the component of particle diameter of 710 $\mu$m or more) was determined. Measurements were carried out three times, and the average value was used to calculate the content.

$$[\text{Amount of particles of } 710 \ \mu\text{m or more}] = 100 \times [\text{weight of particles remaining on the sieve with an aperture size of } 710 \ \mu\text{m}] / [\text{weight of sample measured with the sieve tester}] \ (\%)$$

(II-8) (Viscosity of syrup)

Silicone oil was poured into an oil bath equipped with a stirrer, and was heated to 50 °C. In a 110-cc screw-top bottle (50 mm in diameter), 16 g of resin beads, 64 g of ethyl cyanoacrylate (in case of 20% by mass of the thickener), and a rotor were placed, and the lid of the screw-top bottle was closed. The screw-top bottle was placed in an oil bath and the stirrer was rotated (150 rpm) to dissolve the resin beads in ethyl cyanoacrylate. In case of 10% by mass, the resin beads and ethyl cyanoacrylate were dissolved in a ratio of 8 g of resin beads to 72 g of ethyl cyanoacrylate.
Resins having a weight average molecular weight of 85,000 or more and less than 300,000 were each dissolved in ethyl cyanoacrylate at a concentration of 20% by mass, cooled, and the viscosity $\eta$1 measured at 25 °C was determined. After the solution was allowed to stand at 60 °C for 48 hours, the viscosity $\eta$2 measured at 25 °C was determined.
Resins having a weight average molecular weight of 300,000 or more were each dissolved at a concentration of 10% by mass, cooled, and the viscosity $\eta$3 measured at 25 °C was determined. After the solution was allowed to stand at 60 °C for 48 hours, the viscosity $\eta$4 measured at 25 °C was determined.
A B-type viscometer (LVDV Next digital viscometer manufactured by EKO INSTRUMENTS CO., LTD.) was used as a viscosity meter. Each syrup prepared by the method described in the dissolution rate above was cooled to 25 °C. The syrup solution was measured out in a 40-cc measurement tube, the tube was placed on the viscometer, and a measurement of the viscosity was initiated. The viscosity was measured at a rotor speed of 60 rpm. (If the measurement range exceeded at 60 rpm, the rotation speed was reduced to make a measurement.)

If the viscosity was high, the amount added was adjusted during preparation of the syrup so that the viscosity was adjusted to an appropriate level.

Because the weight average molecular weight was as high as 1,250,000 and the viscosity was as high as 43 Pa·s in a 10% solution in Example 7, a 7%-solution was used and a syrup with 5.4-Pa·s was obtained.

[III. Evaluation of thickener]

The following evaluations were performed by using the methacrylic resin beads obtained in the examples and the comparative examples as the thickener.

(III-1) (Odor)

In a polyethylene container (sealable type, 500-mL eye boy wide opening bottle), 400 g of the methacrylic resin was placed and heated at 60 °C for 2 hours, and then cooled to 30 °C. The odor was scored according to the following criteria.

6: unbearable odor
5: very irritant odor
4: irritant odor
3: odor was perceived intense but not irritant
2: odor was perceived (slightly) but not irritant
1: odor was hardly perceived

This evaluation was done by five people and the average was scored according to the following criteria

A (very excellent): 2 or less
B (excellent): more than 2 and 3 or less
C (good): more than 3 and 4 or less
D (poor): more than 4

(III-2) (Dissolution rate)

Silicone oil was poured into an oil bath equipped with a stirrer, and was heat to 50 °C. In a 110-cc screw-top bottle (50 mm in diameter), 16 g of the thickener, 64 g of ethyl cyanoacrylate monomer (in case of 20 wt% of the thickener) and a rotor, and the lid of the screw-top bottle was closed. The screw-top bottle was placed in the oil bath, and the stirrer was rotated (150 rpm) to start a measurement. The time until the thickener in the bottle dissolved into ethyl cyanoacrylate was measured. In case of 10 wt%, the thickener and ethyl cyanoacrylate monomer were dissolved in the ratio of 8 g of the thickener to 72 g of ethyl cyanoacrylate monomer.

A (very excellent): completely dissolved within 45 minutes
B (excellent): completely dissolved within 60 minutes
C (good): the dissolution required 60 minutes or longer but almost completely dissolved
D (poor): undissolved material was observed

(III-3) (Long-term stability after dissolution)

As above, methacrylic resin beads were dissolved in ethyl cyanoacrylate at 50 °C. Resins having a weight average molecular weight of 85,000 or more and less than 300,000 were dissolved at a concentration of 20% by mass, and resins having a weight average molecular weight of 300,000 or more were dissolved at a concentration of 10% by mass in ethyl cyanoacrylate, followed by cooling. The viscosity $\eta 5$ measured at 25 °C, and the viscosity $\eta 6$ after being allowed to stand for 90 days at 25 °C were determined.

The stability was evaluated based on the value of $\eta 6/\eta 5$ according to the following criteria.

A (extremely excellent): less than 5
B (excellent): 5 or more and less than 10
C (good): 10 or more and less than 20

D (poor): 20 or more

(III-4) (Light resistance)

A portion of the sample dissolved in ethyl cyanoacrylate as described above was sampled, placed in a transparent 100-mL container (sealable), and left outside under direct sunlight for one month. The sample was rated according to the following: poor (C): the sample cured after the sample was allowed to stand; good (B): the sample did not cure but clearly lost fluidity; or excellent (A): the sample remained its fluidity.

[Table 1]

| | | | | Example 1 | Example 2 | Example 3 | Example 4 | Comp. Ex. 1 | Comp. Ex. 2 | Example 11 | Example 9 | Example 10 | Example 12 |
|---|---|---|---|---|---|---|---|---|---|---|---|---|---|
| Composition | | MMA | % by | 99.5 | 99.8 | 97.5 | 99.5 | 100 | 94 | 99.5 | 99.5 | 97.5 | 99.5 |
| | | BA | % by | 0.5 | 0.2 | 2.5 | 0.5 | 0 | 6 | 0.5 | 0.5 | 2.5 | 0.5 |
| Physical property | (II-1) | Mw | 10,000 | 14.2 | 13.6 | 14.2 | 14.7 | 15.0 | 15.2 | 12.4 | 15.0 | 14.6 | 14.7 |
| | | Mw/Mn | - | 1.9 | 2.0 | 2.0 | 1.9 | 1.8 | 1.9 | 2.6 | 2.0 | 1.9 | 1.8 |
| | (II-2) | Volume average particle | $\mu$m | 320 | 312 | 352 | 343 | 343 | 330 | 203 | 323 | 321 | 330 |
| | | (SD) | $\mu$m | 121 | 125 | 135 | 120 | 123 | 115 | 108 | 119 | 120 | 115 |
| | | 10% particle diameter D10 | $\mu$m | 198 | 194 | 201 | 198 | 191 | 191 | 92 | 187 | 188 | 191 |
| | (II-3) | Water content | % | 0.3 | 0.3 | 0.3 | 0.8 | 0.3 | 0.3 | 0.3 | 0.3 | 0.3 | 1.3 |
| | (II-4) | MMA volatilization amount | ppm | 0.5 | 0.8 | 0.2 | 1.5 | 1.2 | 0.2 | 0.5 | 0.2 | 0.4 | 12 |
| | (II-5) | YI of acetone solution | - | 1.6 | 1.6 | 1.7 | 1.6 | 1.7 | 1.6 | 2.5 | 2.6 | 1.6 | 1.7 |
| | (II-6) | pH of aqueous phase when dispersed | - | 6.2 | 6.1 | 6.2 | 6.2 | 6.2 | 6.3 | 6.5 | 4.3 | 9.8 | 6.2 |
| | (II-7) | Ratio of particles 710 $\mu$m ot more | % | 0 | 0 | 0.1 | 0 | 0 | 0 | 0.2 | 0 | 0 | 0 |
| | (II-8) | $\eta 1$ | P.s | 2.8 | 1.5 | 2.8 | 5.1 | 5.8 | 6.2 | 2.1 | 5.7 | 5.3 | 5.1 |
| | | $\eta 2$ | P.s | 3.4 | 2.2 | 3.4 | 13.3 | 43 | 7.4 | 11.4 | 28.1 | 69 | 76 |
| | | $\eta 2/\eta 1$ | - | 1.2 | 1.5 | 1.2 | 2.6 | 7.4 | 1.2 | 5.4 | 4.9 | 13.0 | 14.9 |

EP 4 206 295 A1

(continued)

| Evaluation | | | Example 1 | Example 2 | Example 3 | Example 4 | Comp.Ex. 1 | Comp.Ex. 2 | Example 11 | Example 9 | Example 10 | Example 12 |
|---|---|---|---|---|---|---|---|---|---|---|---|---|
| | (III-1) | Odor | A | A | B | C | D | D | A | A | A | C |
| | (III-2) | Dissolution rate | A | A | A | A | A | A | C | A | A | A |
| | (III-3) | Stability after dissolution | A | A | A | C | A | A | D | C | D | D |
| | (III-4) | Light resistance | A | A | A | A | A | A | B | B | C | C |

[Table 2]

| | | | | Example 5 | Example 6 | Example 7 |
|---|---|---|---|---|---|---|
| Composition | | MMA | %by | 99.5 | 99.5 | 99.5 |
| | | BA | %by | 0.5 | 0.5 | 0.5 |
| Physical property | (II-1) | Mw | 10,000 | 40.2 | 65.4 | 125 |
| | | Mw/Mn | - | 2.2 | 2.2 | 2.4 |
| | (II-2) | Volume average particle | μm | 323 | 245 | 198 |
| | | (SD) | μm | 124 | 121 | 110 |
| | | 10% particle diameter D 10 | μm | 201 | 105 | 90 |
| | (II-3) | Water content | % | 0.3 | 0.3 | 0.3 |
| | (II-4) | MMA volatilization amount | ppm | 0.4 | 0.4 | 0.5 |
| | (II-5) | YI of acetone solution | - | 1.6 | 1.6 | 1.6 |
| | (II-6) | pH of aqueous phase when dispersed | - | 6.5 | 6.5 | 6.7 |
| | (II-7) | Ratio of particles 710 μm ot more | % | 0.2 | 0.4 | 2.6 |
| | (II-8) | η3 | P.s | 1.3 | 3.5 | 43 |
| | | η4 | P.s | 1.6 | 6.7 | 67 |
| | | η4/η3 | - | 1.2 | 1.9 | 1.6 |
| Evaluation | (III-1) | Odor | - | A | A | A |
| | (III-2) | Dissolution rate | - | A | A | C |
| | (III-3) | Stability after dissolution | - | A | A | A |
| | (III-4) | Light resistance | - | A | A | A |

[Table 3]

| | | | | Example 8 | Comp. Ex. 3 | Comp. Ex. 4 | Comp. Ex. 5 |
|---|---|---|---|---|---|---|---|
| Composition | | MMA | % by | 99.5 | 99.5 | 97 | 99.5 |
| | | EHA | % by | 0.5 | 0 | 0 | 0 |
| | | MA | % by | 0 | 0.5 | 3 | 0.5 |

(continued)

| | | | | Example 8 | Comp. Ex. 3 | Comp. Ex. 4 | Comp. Ex. 5 |
|---|---|---|---|---|---|---|---|
| Physical property | (II-1) | Mw | 10,000 | 14 | 14.5 | 14.2 | 14.2 |
| | | Mw/Mn | - | 1.9 | 2.0 | 1.9 | 2.1 |
| | (II-2) | Volume average particle | μm | 342 | 345 | 365 | 370 |
| | | (SD) | μm | 120 | 123 | 135 | 141 |
| | | 10% particle diameter D10 | μm | 198 | 191 | 201 | 204 |
| | (II-3) | Water content | % | 0.3 | 0.3 | 0.3 | 0.3 |
| | (II-4) | MMA volatilization amount | ppm | 0.5 | 0.4 | 0.3 | 0.4 |
| | (II-5) | YI of acetone solution | - | 1.6 | 1.7 | 1.6 | 1.7 |
| | (II-6) | pH of aqueous phase when dispersed | - | 6.2 | 6.1 | 6.2 | 6.1 |
| | (II-7) | Ratio of particles 710 μm ot more | % | 0 | 0 | 0.6 | 5.1 |
| | (II-8) | $\eta 1$ | P·s | 3.0 | 4.6 | 2.8 | 4.5 |
| | | $\eta 2$ | P·s | 3.4 | 5.4 | 3.4 | 5.4 |
| | | $\eta 2/\eta 1$ | - | 1.1 | 1.2 | 1.2 | 1.2 |
| Evaluation | (III-1) | Odor | - | B | D | D | D |
| | (III-2) | Dissolution rate | - | A | A | A | D |
| | (III-3) | Stability after dissolution | - | A | B | A | D |
| | (III-4) | Light resistance | - | A | B | A | C |

It can be understood from comparisons of Examples 1 to 4 against Comparative Examples 1 to 4 that the odor after dissolution into a cyanoacrylate was reduced when a predetermined amount of alkyl (meth)acrylate monomer units having an alkyl group with a carbon number of 4 or more was contained.

Additionally, it can be understood from a comparison of Example 1 against Comparative Example 1 that the odor after dissolution into a cyanoacrylate was reduced because alkyl (meth)acrylate monomer units having an alkyl group with a carbon number of 4 or more were copolymerized in both cases. However, when compared against the multistage polymerized product with a wide molecular weight distribution, the single polymerized product with a narrow molecular weight distribution had a higher dissolution stability than the multi-step polymerized product with a wide molecular weight distribution.

Example 1 was different from Examples 9 and 10 in terms of the pH of the aqueous phase when the thickener was dispersed in water. Although the odor was improved at higher levels in all of these cases, Example 1 had even higher dissolution stability and light resistance.

INDUSTRIAL APPLICABILITY

The thickener of the present disclosure has an improved odor and excellent stability after dissolution into a cyanoacrylate, and has industrial applicability.

**Claims**

1. A thickener for cyanoacrylate-based adhesives comprising:
a methacrylic resin comprising 95 to 99.9% by mass of a methyl methacrylate monomer unit and 0.1% to 5% by mass of an alkyl (meth)acrylate monomer unit having an alkyl group with a carbon number of 4 or more.

2. The thickener for cyanoacrylate-based adhesives according to claim 1, wherein an MMA volatilization amount is 10 ppm by mass or less when 5 mg of the methacrylic resin is heated at 60 °C for 10 minutes.

3. The thickener for cyanoacrylate-based adhesives according to claim 1 or 2, wherein a mass ratio of particles having a particle diameter of 710 $\mu$m or more with respect to 100% by mass of the thickener for cyanoacrylate-based adhesives is 5% by mass or less.

4. The thickener for cyanoacrylate-based adhesives according to any one of claims 1 to 3, wherein a pH of the thickener for cyanoacrylate-based adhesives when dispersed in water is 2.0 or higher and 9.0 or lower.

5. The thickener for cyanoacrylate-based adhesives according to any one of claims 1 to 4, wherein a molecular weight distribution (Mw/Mn) of the thickener for cyanoacrylate-based adhesives is 2.5 or less.

6. An adhesive comprising the thickener for cyanoacrylate-based adhesives according to any one of claims 1 to 5 and an alkyl cyanoacrylate.

7. The adhesive according to claim 6, wherein a viscosity is 0.5 to 10 Pa·s.

## INTERNATIONAL SEARCH REPORT

| | International application No. |
|---|---|
| | **PCT/JP2021/033602** |

### A. CLASSIFICATION OF SUBJECT MATTER

*C09J 4/04*(2006.01)i; *C09J 11/08*(2006.01)i; *C08F 220/14*(2006.01)i; *C09K 3/00*(2006.01)i
FI:   C09J4/04; C09J11/08; C09K3/00 103G; C09K3/00 103H; C08F220/14

According to International Patent Classification (IPC) or to both national classification and IPC

### B. FIELDS SEARCHED

Minimum documentation searched (classification system followed by classification symbols)

C09J4/04; C09J11/08; C08F220/14; C09K3/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | JP 2016-507631 A (HENKEL AG & CO. KGAA) 10 March 2016 (2016-03-10) | 1-7 |
| A | JP 11-209699 A (TOAGOSEI CO., LTD.) 03 August 1999 (1999-08-03) | 1-7 |
| A | JP 2003-507494 A (CLOSURE MEDICAL CORP.) 25 February 2003 (2003-02-25) | 1-7 |
| A | JP 58-103568 A (TOAGOSEI CO., LTD.) 20 June 1983 (1983-06-20) | 1-7 |
| A | WO 2018/199268 A1 (TOAGOSEI CO., LTD.) 01 November 2018 (2018-11-01) | 1-7 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 November 2021** | **16 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/033602**

| Patent document cited in search report | | | Publication date (day/month/year) | Patent family member(s) | | | Publication date (day/month/year) |
|---|---|---|---|---|---|---|---|
| JP | 2016-507631 | A | 10 March 2016 | US | 2014/0238603 | A1 | |
| | | | | EP | 2961807 | A | |
| | | | | CN | 105189679 | A | |
| JP | 11-209699 | A | 03 August 1999 | (Family: none) | | | |
| JP | 2003-507494 | A | 25 February 2003 | US | 2002/0065336 | A1 | |
| | | | | EP | 1206291 | A1 | |
| | | | | CN | 1378463 | A | |
| JP | 58-103568 | A | 20 June 1983 | (Family: none) | | | |
| WO | 2018/199268 | A1 | 01 November 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5131956 B
- JP 2018178076 A
- JP H0415267 A